Europäisches Patentamt

European Patent Office

Office européen des brevets

(19)

(11) Publication number: **0 146 959**
**B1**

# EUROPEAN PATENT SPECIFICATION

(12)

(45) Date of publication of patent specification: 04.11.87

(51) Int. Cl.⁴: **B 62 D 1/04**

(21) Application number: **84116157.3**

(22) Date of filing: **21.12.84**

(54) Steering wheel.

(30) Priority: **25.12.83 JP 205129/83 u**

(43) Date of publication of application:
**03.07.85 Bulletin 85/27**

(45) Publication of the grant of the patent:
**04.11.87 Bulletin 87/45**

(84) Designated Contracting States:
**DE FR GB**

(56) References cited:
FR-A-1 561 120
FR-A-2 418 487
FR-A-2 515 094
GB-A-2 041 858

(73) Proprietor: **TOYOTA JIDOSHA KABUSHIKI KAISHA**
**1, Toyota-cho Toyota-shi**
**Aichi-ken 471 (JP)**

(72) Inventor: **Kondo, Katsumi c/o Toyota Jidosha K.K.**
**1, Toyota-cho, Toyota-shi**
**Aichi-ken (JP)**
Inventor: **Tsutiya, Yasuhiro c/o Toyota Jidosha K.K.**
**1, Toyota-cho, Toyota-shi**
**Aichi-ken (JP)**
Inventor: **Yamazawa, Yasushi c/o Toyota Jidosha K.K.**
**1, Toyota-cho, Toyota-shi**
**Aichi-ken (JP)**
Inventor: **Niimi, Takatsune**
**2-186, Azafukitsuke Oazaishihama Higashiura-cho**
**Tita-gun, Aichi-ken (JP)**
Inventor: **Yamamoto, Takashi**
**58-5, Azamiyashiro Miyaushiro Imaise-cho**
**Ichinomiya-shi Aichi-ken (JP)**

Courier Press, Leamington Spa, England.

EP 0 146 959 B1

**0 146 959**

(74) Representative: **Grams, Klaus Dieter, Dipl.-Ing.
et al
Patentanwaltsbüro Tiedtke-Bühling-Kinne-
Grupe-Pellmann-Grams-Struif Bavariaring 4
D-8000 München 2 (DE)**

## Description

Background of the invention

Field of the invention

This invention relates to a steering wheel for use in automobiles and other vehicles. More particularly, this invention relates to a steering wheel using a fiber reinforced resinous structure as its reinforcement.

Description of the prior art

Recent inclination of automotive vehicles toward general reduction of weight has been encouraging use of increasing amounts of resins in automobile parts. Steering wheels are no exception. Resins of polyurethane, polypropylene, and other similar types have been adopted as materials for steering wheels. Since these resins have no sufficient strength, however, they have been invariably required to incorporate metallic reinforcement. Generally, round bars and pipes of iron are used as the metallic reinforcement. The weight of metallic reinforcement normally accounts for as much as about 40% of the entire weight of steering wheel. The use of the metallic reinforcement, therefore, contradicts the inclination toward reduction of weight and proves disadvantageous.

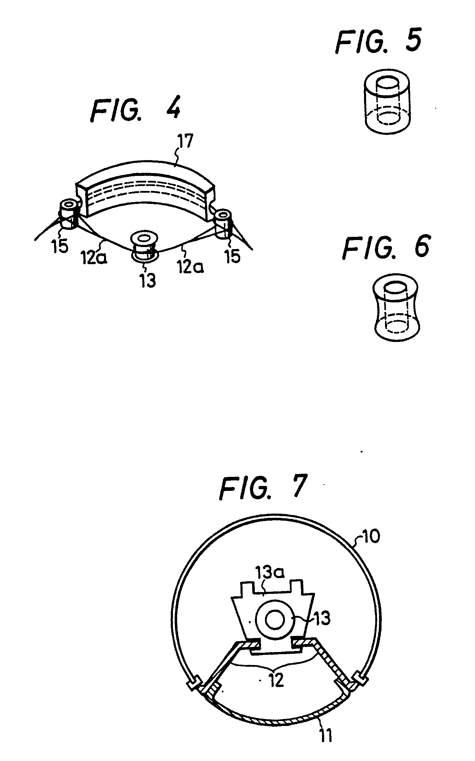

Fig. 7 illustrates a typical conventional reinforcement of a steering wheel formed of such round bars and round pipes. This reinforcement is a core around which resins are molded for forming a steering wheel. The reinforcement of this steering wheel comprises a ring part 10, a sub-ring part 11 and spoke parts 12 respectively. The reinforcing spoke parts 12 and the reinforcing sub-ring part 11 are formed of round bars of iron. These reinforcing parts 11, 12 are integrally bound by being welded at the outer edges of the spoke parts 12. The inner ends of the spoke parts 12 are fastened by welding to a boss plate 13a of an iron plate supporting a boss 13 thereon.

The reinforcing ring part 10 is formed of a pipe. Into the opposite ends of the pipe, the bent outer ends of the spoke parts 12 are inserted. The ring part 10 and the spoke parts 12 are joined by being welded where the latters are inserted into the former.

In the conventional reinforcement of steering wheel illustrated in Fig. 7, the ring part 10 is formed of a pipe for the purpose of weight reduction. However, since this pipe is made of iron, the overall weight is about 0.8 kg in the steering wheel of an ordinary automobile. This reinforcing part is rather heavy.

Since these reinforcing parts 10, 11, and 12 are formed of round bars or round pipes of iron, respectively, the joints of these reinforcing parts 10, 11, and 12 are to be inevitably welded one by one. Thus, the conventional reinforcement of the steering wheel has also proved disadvantageous from standpoint of manufacture.

In addition, to permit this welding, the portions of the reinforcing parts to be welded are not allowed to have a small wall thickness. The boss plate 13a for example has a wall thickness of about 2 mm. This fact constitutes itself one of the factors for a comparatively high weight.

A further reduction of the weight of the steering wheel is still desirable to prevent vibrations to be transmitted through the steering system to the automobile driver during the travel of the automobile. Specifically, the magnitude of such vibrations is decreased in proportion as the weight of steering wheel is reduced.

Further recently a steering wheel comprising the features of the classifying portion of the claim 1 has been developed and become known (GB—A—2 041 858). This known steering wheel has the advantage that, due to its reinforcement made of a fiber reinforced resinous structure, it provides low weight and at the same time some rigidity and strength. The low weight is advantageous in itself and in addition decreases the vibrations caused in the steering system during running of the vehicle equipped with the steering wheel.

However, the joints between the ring part and the spoke part of the reinforcement of the known steering wheel require improvement. It has been found out that the steering wheel might break in the area of the joints under heavy load.

It is a primary object of the invention to provide a steering wheel that is light weight and at the same time sufficiently strong and rigid throughout the entire steering wheel construction.

Another object of this invention is to provide a method for the manufacture of the aforementioned steering wheel by using fiber reinforced resin using continuously long fibers as reinforcement for a steering wheel made of resin.

These objects are accomplished by the steering wheel and the method according to claims 1 and 5, respectively.

In the steering wheel of the present invention, spacers are interposed one each between the ring part, the sub-ring part, and the spoke part and a strand of continously long fiber impregnated with resin is continuously wound via the spacers along the ring part, the sub-ring part, and the spoke parts so that the joints between those parts are integrally bound by the aid of the spacers with the fiber reinforced resin.

Since the steering wheel is constructed as described above, the strong reinforcement can be obtained and as a result, the steering wheel can be produced in a reduced weight and the reduction of weight results in a decrease in the vibrations caused in the steering system during the drive. Further, since the resinous structure consisting of continuous impregnated fibers has a better vibration property than iron, the reinforcement itself contributes to the absorption of the vibrations. Also in terms of the strength of reinforcement, since the number of windings of the continuously long fiber strand in the ring part, the sub-ring part, and the spoke parts can be adjusted, the optimum strength required at any portion of the steering wheel can be freely controlled.

Further, since the spacers, cylindrical or drum like in shape, are disposed at the joints of the ring part, the sub-ring part and spoke parts, and the winding direction of the continuously long fiber to be wound along those parts is turned via the spacers, the joints cause no sharp bending of the fibers and far from that the fiber strand to be wound intersects with each other on the spacer while being wound severalfold, so that the reinforcement, when it is hardened integrally with spacers by the resin, becomes quite stout.

The effects of this invention will become more apparent from the description given in further detail hereinbelow with reference to the accompanying drawings.

Brief description of the drawings

Fig. 1 is a plan view of a steering wheel of the present invention.

Fig. 2 is a diagram illustrating the construction of a jig for aiding in manufacturing reinforcement of a steering wheel according to this invention.

Fig. 3 is a cross section taken along the line IV—IV in the diagram of Fig. 2.

Fig. 4 is a perspective view illustrating the manner in which a strand of fiber impregnated with resin is wound on the jig.

Fig. 5 is a perspective view illustrating a cylindrical spacer.

Fig. 6 is a perspective view illustrating a hand-drum type of spacer.

Fig. 7 is a plan view of a conventional reinforcement of a steering wheel using metallic materials.

Description of the preferred embodiment

As a fiber strand to be used in this invention, many can be mentioned, however what is exemplified hereinafter is a continuously long fiber strand which is formed of a plurality of glass fibers roved. And as a resin to impregnate the fiber strand, epoxy resin is used.

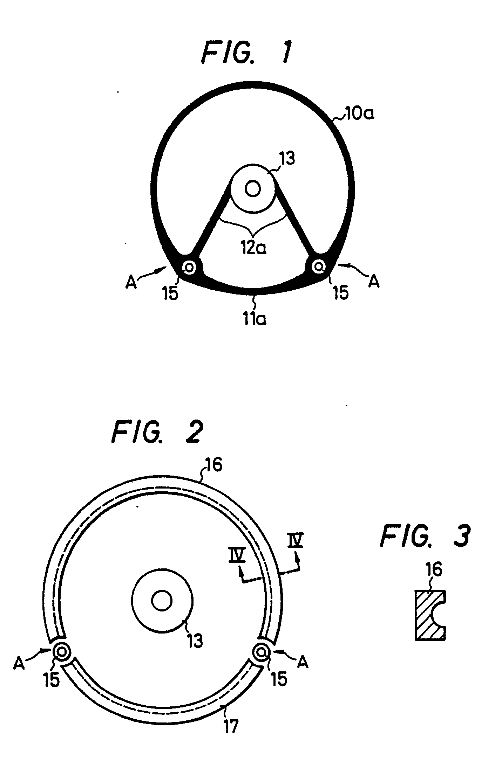

With reference to Fig. 1, a reinforcement comprising a ring part 10a, a sub-ring part 11a, and spoke parts 12a is formed by winding continuous glass fiber strand impregnated with a resin (FRP) in prescribed numbers of turns. Even a boss 13 made of iron and disposed at the center of the wheel is bound together by being wound with continuous glass fibers of FRP. At the joints A between the ring part 10a, the sub-ring part 11a and the spoke parts 12a, cylindrical spacers 15 are disposed one each. The aforementioned continuous glass fiber strand of FRP is also wound on the peripheries of these spacers 15 to permit integral formation of the ring part 10a, the sub-ring part 11a, and the spoke parts 12a.

Now, the method by which the reinforcement constructed as described above is manufactured will be described below.

First, as illustrated in Fig. 2, a boss 13 made or iron is disposed at the center and, at the same time, two cylindrical spacers 15 are disposed one each at the joints A between the ring part and the sub-ring part and the spoke parts, and then jig parts 16, 17 are disposed at the positions of the ring part and the sub-ring part. The jig parts 16, 17 form a jig and are disposed as indicated for the purpose of aiding in formation of the ring part 10a and the sub-ring part 11a. These jig parts have a semicircular cross section as illustrated in Fig. 3 so as to permit formation of reinforcement parts 10a and 11a.

In the condition of arrangement illustrated in Fig. 2, a strand of continuous long glass fiber impregnated with resin is directly wound on the boss 13 as illustrated in Fig. 4 to effect binding of the continuous glass fibers to the boss 13. Then, the continuous glass fibers are wound on the spacers 15 and subsequently, with the spacers serving as direction-changing bridges, wound on the jig parts 16 and 17. By performing the procedure mentioned above, optionally by repeating this procedure time and again, the ring part 10a, the sub-ring part 11a, and the spoke parts 12a are formed of continuous glass fibers impregnated with resin.

The jig parts 16 and 17 are removed after the resin impregnating the continuous glass fibers is hardened.

In the embodiment described above, a strand of continuously long fiber of glass impregnated with epoxy resin is exemplified. More preferably a strand of carbon fiber, having a property of high strength and elasticity may cause the more reduction of weight than the glass fiber. In addition, polyaromatic amid fiber also may be used. Further a mixture of these fibers may preferably be used.

The diameter of the glass fiber roving is not specifically limited, but preferable dimension is, in the case of glass fiber, 8 to 20 microns and in the case of carbon fiber 7 to 15 microns. As the other resins for impregnating the continuous glass fibers than epoxy resin, there can be used unsaturated polyester resin and phenol resin, for example.

Further in the preferred embodiment described above, the numbers of windings of the strand of the continuous glass fibers on the ring part and the sub-ring part on the one hand and on the spoke parts can be different, depending partly on the disposition of the boss 13 and the spacers 15, so as to provide the reinforcement members 10a, 11a, and 12a with the required strength.

In the embodiment described above, when the spacers 15 are provided at the cores thereof with holes, these holes can be utilized as positioning holes during the formation of a surface pad of urethane resin on the reinforcement which is generally carried out by injection molding. The urethane resin which is inserted into the holes during the injection molding serves to reinforce the spacers 15.

In the embodiment described above, since continuous glass fibers are bound to the boss 13 by being wound on the periphery thereof, the boss 13 and the spoke parts 12a can be joined without requiring use of any adhesive agent.

Further as the material of the boss, it can be resin, FRP, aluminium, aluminum alloy, magnesium, magnesium alloy or steel.

This invention has been described with reference to a specific embodiment illustrated in the drawings. This invention is not limited to this particular embodiment but may be embodied in various ways within the scope of the spirit of the invention.

For example, this invention has no reason to limit the shape of the spacers to the cylindrical ones 15 as involved in the embodiment described above and exemplified in Fig. 5, and also it can be a hand drum type as illustrated in Fig. 6. Further, optionally, the spacers 15 may be formed of aluminum alloy or resin, a material featuring light weight. Use of these spacers contributes more to the reduction of weight.

**Claims**

1. A steering wheel comprising a reinforcement of a ring part (10a, 11a), a boss (13) at the center of the ring part and spoke parts (12a) each connecting the boss part with the ring part, the ring part and the spoke parts being a fiber reinforced resinous structure made from a strand of continuously long fiber impregnated with a resin and wound to form said structure before hardening, characterized in that cylindrical or hand drum shaped spacers (15) are disposed at the joints (A) between the ring part (10a, 11a) and the spoke parts (12a).

2. A steering wheel according to Claim 1, wherein said boss (13) is made of resin or fiber reinforced plastic.

3. A steering wheel according to Claim 1, wherein said boss (13) is made of metal such as aluminium, aluminium alloy, magnesium, magnesium alloy or steel.

4. A steering wheel according to one of Claims 1 to 3, wherein said continuous long fiber is glass fiber, carbon fiber, polyaromatic amid fiber or mixture thereof.

5. A method for the manufacture of a steering wheel having a reinforcement consisting of a fiber reinforced resinous structure comprising the steps of, disposing a boss (13) at a center of a substantially circular jig (16, 17), impregnating a strand of continuously long fiber with a resin, winding the strand of fiber impregnated with the resin via the boss (13) on a ring jig part (16) and a sub-ring jig part (17) of the jig, thereby forming a ring part (10a), a sub-ring part (11a) and spoke parts (12a) of the reinforcement, hardening the resin, and removing the jig parts (16, 17) after the hardening, characterized by the steps of disposing spacers (15) at the joints between the ring jig part (16) and the sub-ring jig part (17) before winding the strand of fiber on said jig parts (16, 17) and the boss (13), starting the winding of the strand of fiber by fastening one end of it to the boss (13), and additionally winding the strand of fiber via the spacers (15).

**Patentansprüche**

1. Lenkrad, mit einer Verstärkung aus einem Ringteil (10a, 11a), einer Nabe (13) in der Mitte des Ringteils und Speichenteilen (12a), die jeweils das Nabenteil mit dem Ringteil verbinden, wobei das Ringteil und die Speichenteile eine faserverstärkte Harzstruktur aufweisen, die von einem Strang einer kontinuierlichen, langen, mit einem Harz getränkten Faser gebildet ist, die zur Bildung der Struktur vor dem Härten gewickelt wird, dadurch gekennzeichnet, daß an den Verbindungen (A) zwischen dem Ringteil (10a, 11a) und den Speichenteilen (12a) zylindrische oder handtrommelförmige Abstandshalter (15) angeordnet sind.

2. Lenkrad nach Anspruch 1, dadurch gekennzeichnet, daß die Nabe (13) aus Harz oder faserverstärktem Kunststoff besteht.

3. Lenkrad nach Anspruch 1, dadurch gekennzeichnet, daß die Nabe (13) aus einem Metall, etwa Aluminium, einer Aluminiumlegierung, Magnesium, einer Magnesiumlegierung oder Stahl, besteht.

4. Lenkrad nach einem der Ansprüche 1 bis 3, dadurch gekennzeichnet, daß die kontinuierliche, lange Faser eine Glasfaser, eine Carbonfaser, eine aromatische Polyamidfaser oder eine Mischung von diesen ist.

5. Verfahren zur herstellung eines Lenkrads mit einer Verstärkung, die aus einer faserverstärkten Harzstruktur besteht, mit den Schritten:
Anordnen der Nabe (13) in der Mitte einer im wesentlichen kreisförmigen Schablone (16, 17),
Tränken eines Stranges einer kontinuierlichen, langen Faser mit einem Harz,
Wickeln des Stranges der mit dem Harz getränkten Faser über die Nabe (13) auf ein Schablonenringteil (16) und ein Schablonenringnebenteil (17) der Schablone, wodurch ein Ringteil (10a), ein Ringnebenteil (11a) und Speichenteile (12a) der Verstärkung gebildet werden,
Härten des Harzes und
Entnahme der Schablonenteile (16, 17) nach dem Härten,
gekennzeichnet durch die Schritte:
Anordnen von Abstandshaltern (15) an den Verbindungen zwischen dem Schablonenrighteil (16) und dem Schablonenringnebenteil (17) vor dem Wickeln des Stranges der Faser auf die Schablonenteile (16, 17) und die Nabe (13),
Beginnen des Wickelns des Stranges der Faser mit der Befestigung von derem einen Ende an der Nabe (13) und
zusätzliches Wickeln des Stranges der Faser über die Abstandshalter (15).

**Revendications**

1. Volant de direction comprenant l'armature d'une partie annulaire (10a, 11a), d'un moyeu (13) au centre de la partie annulaire et des parties en rayons (12a) reliant chacun la partie moyeu avec la partie annulaire, partie annulaire et parties en rayons étant une structure résineuse armée de fibres fabriquée à partir d'un câble de longues fibres continues imprégné d'une résine et enroulé pour former cette structure avant durcissement, caractérisé en ce que des éléments d'espacement (15) cylindriques ou en forme de tambour à face latérale concave sont disposés aux liaisons (A) entre la partie annulaire (10a, 11a) et les parties en rayons (12a).

2. Volant de direction selon la revendication 1, caractérisé en ce que ce moyeu (13) est réalisé en résine ou en matière plastique armée de fibres.

3. Volant de direction selon la revendication 1, caractérisé en ce que ce moyeu (13) est fait d'un métal tel que l'aluminium ou ses alliages, le magnésium ou ses alliages, ou l'acier.

4. Volant de direction selon l'une des revendications 1 à 3, caractérisé en ce que lesdites longues fibres continues sont des fibres de verre, de carbone, d'amide polyaromatique ou leurs mélanges.

5. Procédé de réalisation d'un volant de direction renforcé par une structure résineuse armée de fibres, caractérisé en ce qu'il comprend les étapes suivantes:

—disposer un moyeu (13) au centre d'un gabarit sensiblement circulaire (16, 17);

—imprégner un câble de longues fibres continues avec une résine;

—enrouler le câble de fibres imprégnés de résine via le moyeu (13) sur une partie gabarit annulaire (16) et une partie gabarit annulaire inférieur (17), de manière à former une partie annulaire (10a), une partie annulaire inférieure (11a) et des parties rayons (12a) de l'armature;

—durcir la résine et

—retirer les parties en gabarit (16, 17) après durcissage, caractérisé par les étapes suivantes:

—disposer des éléments d'espacement (15) aux liaisons entre la partie de gabarit annulaire (16) et la partie gabarit annulaire inférieure (17) avant d'enrouler le câble de fibres sur lesdites parties de gabarit (16, 17) et le moyeu (13),

—commencer l'enroulement du câble de fibres en fixant une de ses extrémités au moyeu (13), et

—continuer l'enroulement du câble de fibres par les éléments d'espacement.

0 146 959

# FIG. 1

# FIG. 2

# FIG. 3

1

FIG. 4

FIG. 5

FIG. 6

FIG. 7